# EUROPEAN PATENT APPLICATION

(11) **EP 4 266 477 A1**
(43) Date of publication of application: **25.10.2023**
(21) Application number: 22771112.4
(22) Date of filing: 02.03.2022
(51) Int. Cl.: H01M 50/559, H01M 50/109, H01M 50/547, H01M 50/566

(54) **TERMINAL-EQUIPPED BUTTON CELL**

(30) Priority: 16.03.2021 JP 2021042785
(71) Applicant: Seiko Instruments Inc., Chiba-shi, Chiba 261-8507 (JP)
(72) Inventor: HIRAMATSU, Hirotaka, Chiba-shi, Chiba 261-8507 (JP)
(74) Representative: Lewis Silkin LLP
(86) International application number: PCT/JP2022/008808
(87) International publication number: WO 2022/196358

(57) **Abstract**

A terminal-equipped button cell of the present invention includes: a cathode can and an anode can having flat cylindrical shapes; a gasket configured to insulate and seal the cathode can and the anode can; and a cathode terminal and an anode terminal fixed to a bottom surface of the cathode can and a bottom surface of the anode can, wherein the bottom surface of the cathode can is curved convexly and outwardly in a thickness direction by 100 µm or less while being integrated with the anode can, and the cathode terminal has a flat cathode connecting part, and the cathode terminal is disposed along a radial direction of the bottom surface of the cathode can, and the cathode connecting part is fixed to the bottom surface by being inclined so as to form a tangent line to the bottom surface at a position other than a center of the bottom surface when viewed in a sectional view following the radial direction and perpendicular to the bottom surface.

## Description

### [Technical Field]

The present invention relates to a terminal-equipped button cell. Priority is claimed on Japanese Patent Application No. 2021-042785, filed in Japan on March 16, 2021, the content of which is incorporated herein by reference.

### [Background Art]

Flat silver oxide cells, which are coin types or button types, are used for small electronic devices. The silver oxide cell has a characteristic that the voltage thereof is stable for a long time by adopting silver oxide as a cathode active material (see Patent Document 1).

When a coin-type cell is used for the small electronic devices, the coin-type cell may be required to be attached to a printed circuit board. For example, in a lithium cell such as a lithium secondary cell or a CR primary cell, a technology for welding a lead terminal formed of a nickel plate or the like to the cell to attach the same to a substrate by soldering, is widely known (see Patent Document 2).

### [Citation List]

### [Patent Documents]

[Patent Document 1]
   Japanese Unexamined Patent Application, First Publication No. 2010-44906
[Patent Document 2]
   Japanese Unexamined Utility Model Application, First Publication No. S62-157060

### [Summary of Invention]

### [Technical Problem]

In the silver oxide cell described in Patent Document 1, a cathode mixture (a mixture of an active material, a conductive auxiliary agent, a binder, and the like) are disposed inside a bottom surface of a cathode can. Furthermore, a separator, a gasket, an electrolytic solution, and an anode mixture are incorporated into the cathode can, the cathode can is then placed on an assembling machine by covering the cathode can on an anode can, and the cathode can is caulked to a rim of the anode can, thereby manufacturing a silver oxide cell.

In this case, the cathode can has stress that is generated on the bottom surface of the cathode can during caulking due to the combination of the shape of the caulking, a filling rate of an active material or electrolytic solution with respect to inner volume of the caulking, a material of the cathode can and anode can, and the like, so that the cathode can is slightly swollen in the thickness direction with the maximum stress in the vicinity of the center with respect to a circumference side of the cathode can.

Particularly, in an alkaline primary cell including the silver oxide cell described above, in order to obtain a large discharge capacity as possible, the cathode can is strongly caulked during assembly to prevent leakage of the electrolytic solution while increasing the filling rate of the active material and electrolytic solution. In this case, there is a tendency that a stress is easily generated on the cathode can is easily swollen in the vicinity of the center of the cathode can. In addition, even in a non-aqueous button-type primary cell or a button-type secondary cell, the cathode can may be swollen in the same manner as in the alkaline primary cell due to a balance of each factor of the filling rate of the active material or the electrolytic solution, the material of the cathode can and anode can, and the stress during caulking.

Although terminals welded to the coin-type or button-type cell have various shapes because they are attached to a substrate of mounting equipment or other components, in general, a flat part of the cell (bottom surface of the cathode can or anode can) and a flat portion of the terminal are welded.

In this case, when the terminal is welded to the cathode can in which the vicinity of the center is swollen as described above, in a state where the terminal is disposed across the vicinity of the center of the cathode can, the cathode can and the terminal make contact with each other at one side of the terminal at the center of the cathode can, but a gap is formed between the cathode can and the terminal on the other side of the terminal.

In that case, for example, when the terminal is welded to the cell can at a plurality of welded parts, portions that is insufficiently welded may be formed due to the effect on the gap described above, resulting in a decrease of a welding strength.

An object of the present invention is to provide a terminal-equipped button cell in which a cell can and a terminal are stably bonded.

### [Solution to Problem]

(1) A terminal-equipped button cell according to the present invention includes: a cathode can and an anode can having flat cylindrical shapes; a gasket configured to insulate and seal the cathode can and the anode can; and a cathode terminal fixed to a bottom surface of the cathode can and an anode terminal fixed to a bottom surface of the anode can, wherein the bottom surface of the cathode can is curved convexly and outwardly in a thickness direction by 100 µm or less while being integrated with the anode can, and the cathode terminal has a flat cathode connecting part, and the cathode terminal is disposed along a radial direction of the bottom surface of the cathode can, and the cathode connecting part is fixed to the bottom surface by being inclined so as to form a tangent line to the bottom surface at a position other than a center of the bottom surface when viewed in a sectional view following the radial direction and perpendicular to the bottom surface.

According to the terminal-equipped button cell, since the cathode connecting part of the cathode terminal is fixed along the tangent line at a fixing position of the bottom surface of the cathode can, the cathode connecting part can be connected to the bottom surface of the cathode can without a gap. The cathode connecting part is connected as such, the cathode terminal can be fixed by coming into securely contact with the bottom surface of the cathode can, even if the bottom surface of the cathode can is swollen by about 100 µm or less.

(2) In the terminal-equipped button cell according to one aspect of the present invention, the cathode terminal is preferably welded to the cathode can at a plurality of welded parts between the center of the bottom surface of the cathode can and a rim of the bottom surface of the cathode can.

Assuming that the bottom surface of the cathode can is curved convexly and outwardly and the cathode terminal is disposed along the curved bottom surface, the plurality of welded parts are provided between the center of the bottom surface of the cathode can and the rim of the bottom surface of the cathode can, so that the cathode terminal can be securely fixed to the bottom surface of the cathode can.

(3) In the terminal-equipped button cell according to one aspect of the present invention, a configuration may be employed in which the thickness of the cathode terminal is 0.07 to 0.15 mm.

If the thickness of the cathode terminal is 0.07 to 0.15 mm, a strength of the terminal can be secured. In addition to this, when the cathode terminal is fixed to the cathode can by welding, a welding machine can apply appropriate heat quantity. When the thickness of the cathode terminal is less than the above range, the cathode terminal may be broken and partially damaged during welding, and the welding strength may not thus be improved.

(4) In the terminal-equipped button cell according to one aspect of the present invention, a configuration may be employed in which the cathode terminal includes the cathode connecting part connected to the cathode can by welding, an intermediate part extending toward the anode can by being bent at a substantially right angle from the cathode connecting part, and a substrate connecting part configured to be connected to a substrate and extending in a direction away from the cathode can by being further bent at a substantially right angle from the intermediate part.

By having the intermediate part bent at a substantially right angle from the cathode connecting part and the substrate connecting part further bent at a substantially right angle from the intermediate part, when the cell is attached to the connection surface of a terminal pad of the substrate or the like, the substrate connecting part can be attached to the connection surface of the substrate at a desired angle. Assuming that the cathode terminal is inclined along a curve of the bottom surface of the cathode can, and the substrate connecting part is inclined at a minute angle with respect to the connection surface, a minute gap generated between the substrate connecting part and the connection surface can be effectively used as a solder pool. Therefore, it is possible to provide a terminal-equipped button cell having exceptional bondability during soldering.

(5) In the terminal-equipped button cell according to one aspect of the present invention, the substrate connecting part is preferably inclined with respect to a connection surface of the substrate to which the substrate connecting part is connected.

When the substrate connecting part is connected to the substrate, soldering can be performed in a state where the substrate connecting part is slightly inclined with respect to a bonding surface of the substrate. When the substrate connecting part is slightly inclined with respect to the bonding surface of the substrate, a minute gap can be generated between the bonding surface of the substrate and the substrate connecting part. When soldering is performed on a portion with this gap, soldering can be performed while allowing a solder to enter the gap and generate the solder pool. Therefore, it is possible to provide a terminal-equipped button cell having a bonding structure with high reliability by soldering.

(6) The terminal-equipped button cell according to one aspect of the present invention preferably further includes a flat anode terminal including a substrate connecting part connected to the anode can and extending almost flush with the substrate connecting part of the cathode terminal.

By including the anode terminal in addition to the cathode terminal, the cell can be attached by connecting the substrate connecting part of the cathode terminal and the substrate connecting part of the anode terminal to the substrate. In addition, by including the flat anode terminal extending almost flush with the substrate connecting part of the cathode terminal, it is possible to minimize the size of the terminal-equipped button cell in a thickness direction.

### [Advantageous Effects of Invention]

With the terminal-equipped button cell according to the present invention, since the cathode connecting part of the cathode terminal is fixed along the tangent line at the fixing position of the bottom surface of the cathode can, it is possible to connect the cathode connecting part to the bottom surface of the cathode can without a gap. The cathode connecting part is connected as such, so that even if the bottom surface of the cathode can is swollen by about 100 µm or less, it is possible to provide a structure in which the cathode terminal is securely fixed along the bottom surface of the cathode can.

### [Brief Description of Drawings]

FIG. 1 is a perspective view showing a terminal-equipped button cell according to a first embodiment.
FIG. 2 is a plan view of the terminal-equipped button cell.
FIG. 3A is a side view of the terminal-equipped button cell.
FIG. 3B is a partially enlarged view of the terminal-equipped button cell.
FIG. 4 is a sectional view of a cell 1 that constitutes the terminal-equipped button cell.
FIG. 5 is an explanatory view showing a desirable welding range of a terminal for a cell can of the terminal-equipped button cell.
FIG. 6 is a plan view showing a terminal-equipped button cell according to a second embodiment.
FIG. 7 is a plan view showing a terminal-equipped button cell according to a third embodiment.
FIG. 8 is a plan view showing a terminal-equipped button cell according to a fourth embodiment.
FIG. 9 is an explanatory view of a welding strength test performed on a terminal-equipped button cell manufactured in Examples.
FIG. 10 is a graph showing a relationship between a welding strength and heat quantity in Examples and Comparative Examples.
FIG. 11 is a graph showing a relationship between a welding depth and a welding strength in Examples and Comparative Examples.

### [Description of Embodiments]

Hereinafter, embodiments of a terminal-equipped button cell according to the present invention will be described with reference to the drawings. In the drawings used for the following description, the scale of each member may be changed as appropriate because the individual components are shown on different scales.

### <First Embodiment>

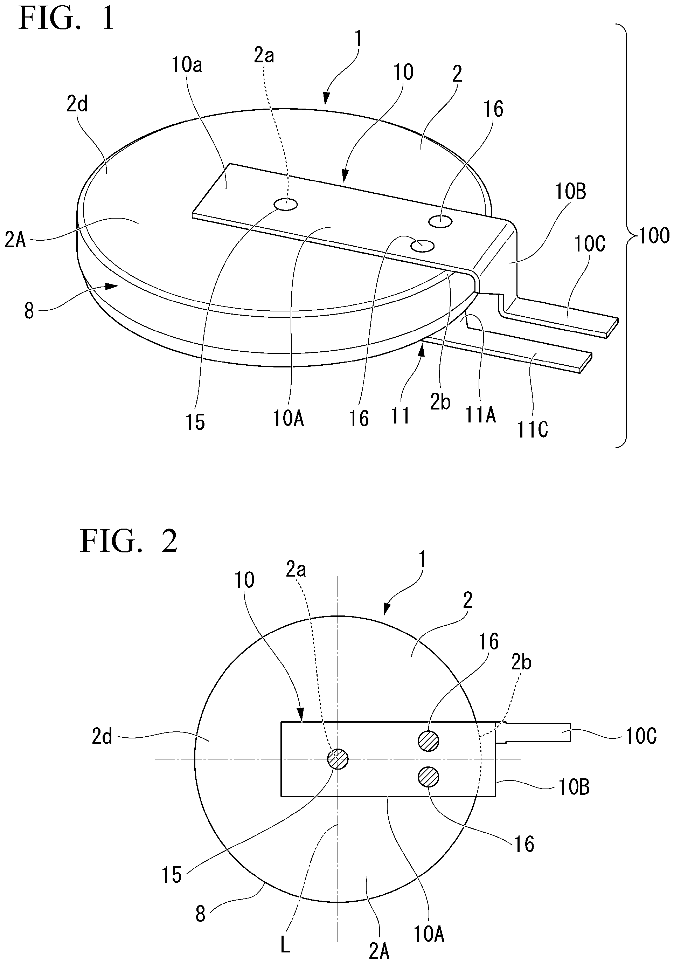

FIGS. 1 to 4 are views showing a terminal-equipped button cell according to a first embodiment of the present invention.

A cell 1 of the present embodiment is a cell in which a cathode mixture, an anode mixture, an electrolytic solution, and the like, which will be described later, are accommodated in a flat metal can. The metal can has a cathode can 2 and an anode can 3. To the cathode can 2 and the anode can 3, a cathode terminal 10 and an anode terminal 11 are attached so as to interpose the cathode terminal 10 and the anode terminal 11 from both sides in a thickness direction, and the cathode terminal 10 and the anode terminal 11 are attached to the cathode can 2 or the anode can 3 by welding. Therefore, a terminal-equipped button cell 100 of the present embodiment has a structure in which the cathode terminal 10 and the anode terminal 11 are attached to the cell 1.

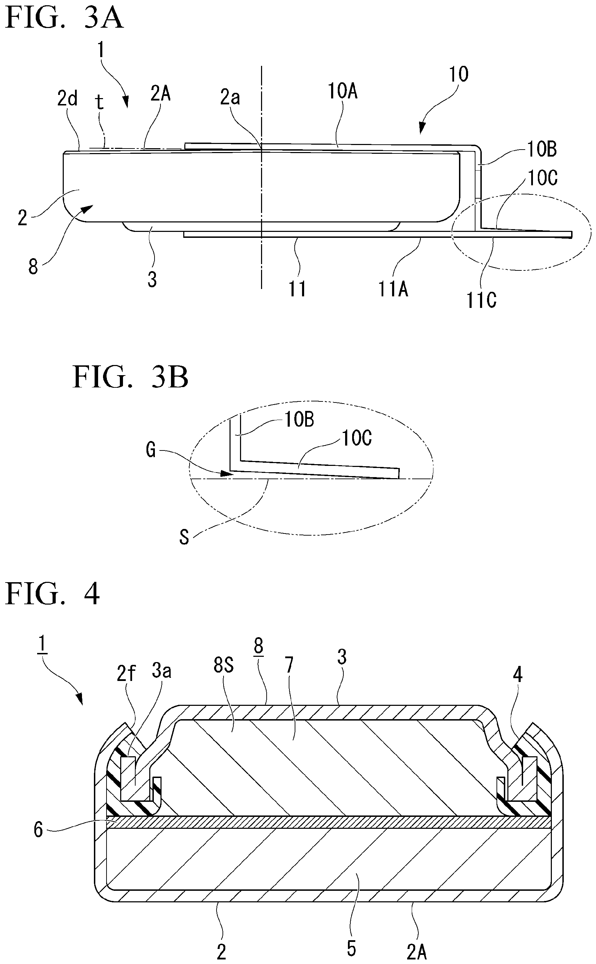

FIG. 4 shows an outline of an internal structure of the cell 1. The cathode can 2 is made of, for example, nickel-plated stainless steel (SUS) and is molded into a flat cylindrical shape (a cup shape with a shallow bottom). The cathode can 2 accommodates a cathode mixture 5 and functions as a cathode current collector. The anode can 3 is made of, for example, a clad material with a three-layer structure having an outer surface layer made of nickel, a metal layer made of stainless steel (SUS), and a current collector layer made of copper and is molded into a flat cylindrical shape (a cup shape with a shallow bottom). In addition, the anode can 3 has a circular opening part 3a that is folded, and a ring-shaped gasket 4 made of nylon is mounted to the opening part 3a.

The anode can 3 is fitted into a circular opening part 2f of the cathode can 2 from a side of the opening part 3a mounted in the gasket 4, and the opening part 2f of the cathode can 2 is caulked and sealed toward the gasket 4, thereby forming a disc-shaped (button-type or coin-type) case 8. A closed space 8S is formed inside the case 8. The gasket 4 insulates and seals the cathode can 2 and the anode can 3.

The closed space 8S has the cathode mixture 5, a separator 6, and an anode mixture 7 accommodated therein, and the cathode mixture 5 and the anode mixture 7 are disposed on both sides of the cathode can 2 and the anode can 3, with the separator 6 interposed therebetween.

When the cell 1 is assembled, the cathode mixture 5 molded in a pellet shape is filled in the cathode can 2. In addition, the separator 6 is laid on the cathode mixture 5 and the gasket 4 is press-fitted into the cathode can 2. A gel-shaped anode mixture 7 is placed on the separator 6, and the separator 6 is covered with the anode can 3. Further, an opening edge of the cathode can 2 is caulked to seal the case 8.

For example, the sealed state of an SR716SW (outer diameter: 7.9 mm, height: 1.6 mm) type silver oxide cell is that, for example, a difference (H2-H1) between a height position H1 of an opening part of the cathode can 2 and a height position H2 of a bottom portion of the anode can 3 is, for example, 0.10 to 0.15 mm. In addition, the International Electrotechnical Commission (IEC) standards are defined as follows. 0.02 mm or greater when H2 ≤ 1.65, 0.06 mm or greater when 1.65 < H2 < 2.5, and 0.08 mm or greater when H2 ≥ 2.5.

The cathode mixture 5 includes a cathode active material, a conductive agent, an electrolytic solution, a binder, an additive, and the like. The cathode active material is not particularly limited as long as it can be used as a cathode active material when zinc or a zinc alloy is used as an anode active material. For example, the cathode active material may be silver oxide, manganese dioxide powder, or a mixture thereof. Alternatively, the cathode active material may be used as nickel oxyhydroxide alone, nickel oxyhydroxide in which cobalt or the like is dissolved, or the like. Graphite or the like can be used as the conductive auxiliary agent. A hydrogen absorbing alloy (LaNi₅) or the like can be used as the additive.

The anode mixture 7 includes, for example, an anode active material, a conductivity stabilizer, a gelling agent, an electrolytic solution, a viscoelasticity adjusting material, additives (thickener, resin powder), and the like.

As the anode active material, for example, zinc powder or zinc alloy powder can be used. Zinc oxide (ZnO) or the like can be used as the conductivity stabilizer. In addition, as the gelling agent, carboxymethylcellulose, polyacrylic acid, or a mixture of carboxymethylcellulose and polyacrylic acid is preferred. By using carboxymethyl cellulose or polyacrylic acid, lyophilicity and liquid retention of the anode mixture 7 with respect to the electrolytic solution can be improved.

As the electrolytic solution, an aqueous potassium hydroxide solution, an aqueous sodium hydroxide solution, or a mixture thereof can be used.

The viscoelasticity adjusting material is blended in order to make viscoelasticity of the anode mixture 7 viscoelastic enough to obtain good handling properties and to improve productivity. As the viscoelasticity adjusting material, resin powder that does not react with the strongly alkaline electrolytic solution is used. Herein, the state of not chemically reacting with the electrolytic solution and not absorbing the electrolytic solution is defined as a state of not reacting with the electrolytic solution.

The separator 6 is interposed between the cathode mixture 5 and the anode mixture 7, and is an insulating film with high ion permeability and mechanical strength.

As the separator 6, those conventionally used for cell separators can be applied without any limitation, and examples thereof can include microporous membranes such as polyethylene membranes, cellophane, graft polymerization membranes, or non-woven fabrics such as absorbent paper made of cellulose. In addition, a combination of the microporous membranes or the non-woven fabrics may be used.

The cell 1 shown in FIGS. 1 to 4 includes the case 8 which is integrated with the anode can 3 by caulking the opening edge of the cathode can 2 as described above. In addition, since the cathode mixture 5, the anode mixture 7, and the electrolytic solution are filled in the case 8 as much as possible, a bottom surface (outer surface) 2A of the cathode can 2 may be curved such that a center 2a of the bottom surface of the cathode can 2 is convexly and outwardly swollen due to a caulking stress generated after the cathode can 2 is caulked. When the bottom surface 2A of the cathode can 2 is curved, a swelling amount (curve height) at the center of the bottom surface (the center of the outer surface) 2a is 100 µm or less compared to when the bottom surface 2A of the cathode can 2 is not curved.

In the present embodiment, the cathode terminal 10 is bonded to the slightly curved bottom surface 2A by laser welding. The cathode terminal 10 is made of a plate material of a highly conductive metal material such as stainless steel (SUS). It is desirable that a thickness of the plate material constituting the cathode terminal 10 is 0.07 mm or greater and 0.15 mm or less.

If the cathode terminal 10 has a thickness of 0.07 to 0.15 mm, the strength of the terminal can be secured. In addition to this, when the cathode terminal 10 is fixed to the cathode can 2 by welding, a welding machine can apply the appropriate heat quantity. When the thickness of the cathode terminal 10 is less than the above range, the cathode terminal may be broken and partially damaged during welding, and the welding strength may not thus be improved.

The cathode terminal 10 includes a strip-shaped cathode connecting part 10A disposed along the bottom surface 2A of the cathode can 2, an intermediate part 10B extending at a substantially right angle to the cathode connecting part 10A, and a flat substrate connecting part 10C extending at a substantially right angle to the intermediate part 10B. The intermediate part 10B has a tapered shape, and the substrate connecting part 10C, which has a width of about 1/4 of the cathode connecting part 10A, extends from the intermediate part 10B.

The substrate connecting part 10C is a portion that is soldered to a connection surface S (see FIG. 3) such as a terminal pad formed on a substrate on which the cell 1 of the present embodiment is mounted. Therefore, the substrate connecting part 10C can be connected to the substrate.

The anode terminal 11 has a strip-shaped anode connecting part 11A disposed along a surface of the anode can 3 and a substrate connecting part 11C extending from one end of the anode connecting part 11A. The substrate connecting part 11C is formed to extend flushing with the plate-shaped anode connecting part 11A. The substrate connecting part 11C is a portion that is soldered to the connection surface S such as a terminal pad formed on the substrate on which the cell 1 of the present embodiment is mounted in the same manner as the substrate connecting part 10C on the cathode side. The substrate connecting part 11C of the anode terminal 11 is appropriately set in length and width according to a size of the terminal pad formed on the substrate on which the cell 1 of the present embodiment is mounted. As an example, as shown in FIG. 1, the substrate connecting part 11C is formed to have substantially the same length and substantially the same width as the substrate connecting part 10C of the cathode terminal 10. The substrate connecting part 10C extends away from the cathode can 2.

The anode terminal 11 is welded to a bottom surface (outer surface) of the anode can 3 such that the substrate connecting part 11C is adjacent to the substrate connecting part 10C of the cathode terminal 10. The anode terminal 11 has a flat plate shape as a whole and extends along the bottom surface of the anode can 3.

In the cathode terminal 10 described above, the length of the cathode connecting part 10A is slightly shorter than a diameter of the bottom surface 2A, and the length of the intermediate part 10B has a length that corresponds to the thickness of the case 8 having the cathode can 2 and the anode can 3. Therefore, when the cathode connecting part 10A is arranged along the bottom surface (outer surface) 2A of the cathode can 2, the intermediate part 10B extends from the bottom portion to the upper portion of the case 8 along the thickness direction of the case 8, and the substrate connecting part 10C is arranged at a position almost flush with the surface of the anode can 3.

In the present embodiment, as shown in FIG. 1, the cathode connecting part 10A is disposed at a position along a diameter (radial direction) of the bottom surface 2A of the cathode can 2, the intermediate part 10B is slightly spaced apart from the outside of the side surface of the case 8, and the substrate connecting part 10C is disposed almost flush with the surface of the anode can 3.

In other words, the cathode terminal 10 is disposed so as to pass through the center 2a of the bottom surface 2A and the rim 2b on one side of the bottom surface 2A along the radial direction of the bottom surface 2A from the center 2a. In addition, the length of the cathode connecting part 10A is longer than the radius of the bottom surface 2A and shorter than the diameter thereof. For this reason, a tip end part 10a of the cathode connecting part 10A extends beyond the center 2a of the bottom surface 2A to an intermediate position between the center 2a and the rim 2d on the other side of the bottom surface 2A.

A position of the tip end part 10a of the cathode connecting part 10A may be a position within the center 2a. That is, although the tip end part 10a is positioned on a left side of the center 2a in FIG. 3, the tip end part 10a may be positioned on the right side of the center 2a. Therefore, the length of the cathode connecting part 10A may be formed shorter than the radius of the bottom surface 2A.

In the present embodiment, the cathode connecting part 10A of the cathode terminal 10 has a circular first welded part 15 formed at a portion facing the center 2a of the bottom surface of the cathode can 2. In addition, the cathode connecting part 10A of the cathode terminal 10 has two circular second welded parts 16 formed to be spaced apart from each other in a width direction of the cathode terminal 10 at a position close to the rim 2b of the bottom surface of the cathode can 2.

Both the first welded part 15 and the second welded parts 16 are welded parts formed by laser welding. The maximum welding depth of the first welded part 15 and the second welded parts 16 to a bottom wall of the cathode can is preferably 5 µm or greater with respect to a thickness of the bottom wall of the cathode can. The diameter of the first welded part 15 and the second welded parts 16 is preferably in a range of 0.3 to 0.7 mm.

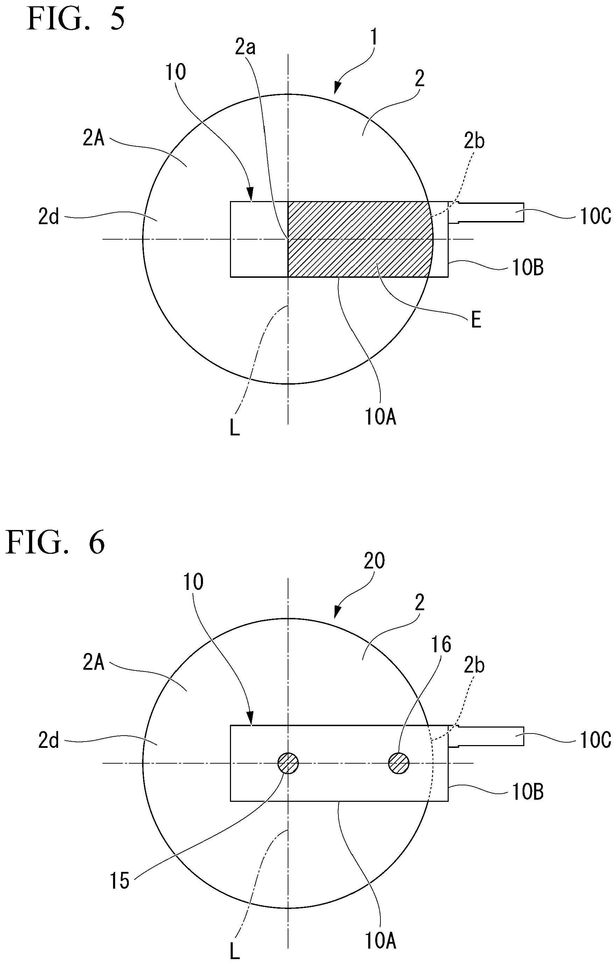

In the present embodiment, it is desirable that the first welded part 15 is formed at or in the vicinity of the center 2a of the bottom surface 2A of the cathode can 2. The vicinity of the center 2a is defined as a side close to a virtual line L in a shaded area E formed between the virtual line L and the rim 2b of the bottom surface 2A when the virtual line L passing through the center 2a along the width direction of the cathode connecting part 10A is drawn as shown in FIG. 5.

In the present embodiment, as shown in FIG. 5, a position in which the second welded part 16 is formed is a side close to the rim 2b in the shaded area E formed between the virtual line L and the rim 2b of the bottom surface 2A. Therefore, the second welded part 16 is formed closer to the rim 2b than the first welded part 15.

Therefore, the cathode connecting part 10A is positioned at the second welded part 16 other than the center of the bottom surface 2A of the cathode can 2, and is welded along the bottom surface 2A of the cathode can 2 and fixed with an inclination of the tangent line t at the welded position. That is, the cathode connecting part 10A is fixed to the bottom surface 2A by being inclined so as to form the tangent line t to the bottom surface 2A at the position other than the center of the bottom surface 2A when viewed in a sectional view following the radial direction of the bottom surface 2A and perpendicular to the bottom surface 2A on which the cathode connecting part 10A is disposed.

A distance between the center 2a of the bottom surface 2A and the second welded part 16 varies depending on an outer diameter of the cathode can 2, and if the cell 1 has an outer diameter of ϕ4 mm to ϕ12 mm, the distance can be selected from a range of about 1 mm to 5 mm.

A terminal-equipped button cell 100 including the cathode terminal 10 and the anode terminal 11 is attached to the connection surface S of the terminal pad such as a substrate including an electric circuit by soldering. The terminal-equipped button cell 100 including the substrate connecting part 10C of the cathode terminal 10 and the substrate connecting part 11C of the anode terminal 11 is soldered by making contact with the terminal pad (connection surface) of the substrate in a state shown in FIG. 1, so that the terminal-equipped button cell 100 can be mounted on the substrate.

In the terminal-equipped button cell 100 of the present embodiment, the first welded part 15 and the second welded part 16 are formed at the positions described above, and the bottom surface 2A is convexly swollen in a range of 100 µm or less. Therefore, the cathode terminal 10 is attached to the cathode can 2 in a slightly inclined state along the bottom surface 2A forming a convex curved surface. When the bottom surface 2A is flat rather than convex, the intermediate part 10B is parallel to a central axis of the case 8, and the substrate connecting part 10C is almost flush with the surface of the anode can 3.

On the other hand, when the bottom surface 2A is inclined as described above, the cathode connecting part 10A, which is inclined so as to form the tangent line t described above, is inclined so as to approach the anode can 3 closer to the rim 2b than the center 2a of the bottom surface 2A.

As shown in FIG. 3, the cathode connecting part 10A is inclined along the tangent line t such that the right end side is positioned lower than the left end side. Due to the inclination, the substrate connecting part 10C is also inclined downward to the right as shown in FIG. 3 in an enlarged manner. If the substrate connecting part 10C is inclined downward to the right, when the substrate connecting part 10C is brought into contact with the connection surface S such as the terminal pad on the substrate, a base end part (intermediate part side) of the substrate connecting part 10C is slightly lifted from the connection surface S to generate a minute gap G. The gap G becomes a solder pool by flowing a solder during soldering. Therefore, a structure provided with the substrate connecting part 10C described above is an advantageous structure for soldering.

In the terminal-equipped button cell 100 configured as described above, the cathode connecting part 10A is disposed along the curved bottom surface 2A to form the first welded part 15 on a side close to the center 2a in the area E and to form the second welded part 16 provided closer to the rim 2b than the first welded part 15 in the area E. Therefore, the first welded part 15 and the second welded part 16 can be arranged at or in the vicinity of a portion in which the cathode connecting part 10A is disposed along the bottom surface 2A. Accordingly, it is possible to obtain the first welded part 15 and the second welded part 16 that are reliably welded by laser welding.

Further, since the terminal-equipped button cell 100 configured as described above includes the flat anode terminal 11, a thickness of the cell of the terminal-equipped button cell 100 can be minimized. In addition, the terminal-equipped button cell 100 has the cathode terminal 10 described above, and is inclined with respect to the connection surface S of the substrate with the gap G interposed therebetween, so that soldering is possible by using the solder pool, and in this case, the substrate connecting part 11C can be soldered by bringing into close contact with the connection surface S of the substrate to be connected without a gap. Accordingly, soldering can be performed without applying a load for bending the substrate connecting part 11C of the anode terminal 11 toward the cathode can 2 side.

Moreover, since soldering can be performed without applying the load to the anode terminal 11, short-circuiting with the cathode can 2 due to deformation of the anode terminal 11 can be prevented.

FIG. 6 shows a terminal-equipped button cell of a second embodiment according to the present invention. A terminal-equipped button cell 20 of the second embodiment is different from the terminal-equipped button cell 100 of the first embodiment in that the number and positions of the second welded parts 16 provided in the cathode connecting part 10A of the cathode terminal 10.

The terminal-equipped button cell 20 of the second embodiment is different from the terminal-equipped button cell 100 of the first embodiment in that the cathode connecting part 10A of the cathode terminal 10 has one circular second welded part 16 formed at the center of the cathode terminal 10 in the width direction and positioned closer to the rim 2b of the bottom surface 2A of the cathode can 2.

The structure of the first embodiment has two second welded parts 16 positioned closer to the rim 2b of the bottom surface 2A, but in the second embodiment, one second welded part 16 is positioned closer to the rim 2b.

As in the second embodiment shown in FIG. 6, one second welded part 16 may be provided.

Even with a terminal-equipped button cell 20 of the second embodiment, it is possible to obtain the same effect as the terminal-equipped button cell 1 of the first embodiment.

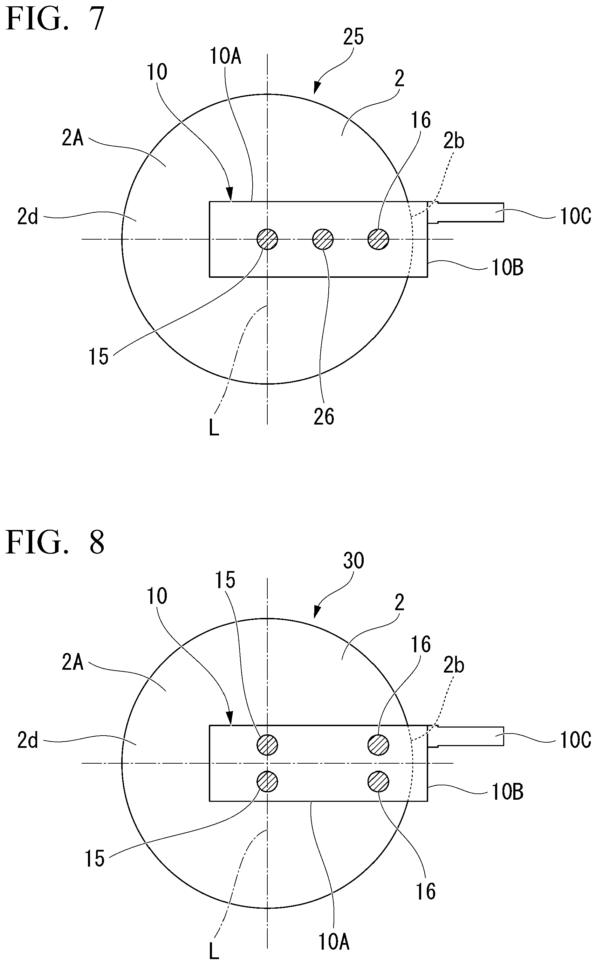

FIG. 7 shows a terminal-equipped button cell of a third embodiment according to the present invention, in which a terminal-equipped button cell 25 of the third embodiment is characterized in that a third welded part 26 is provided as compared to the terminal-equipped button cell 20 of the second embodiment.

The terminal-equipped button cell 25 of the third embodiment is different from the second embodiment in that the third welded part 26 is provided between the first welded part 15 and the second welded part 16.

Even with the terminal-equipped button cell 25 of the third embodiment, it is possible to obtain the same effect as the terminal-equipped button cell 100 of the first embodiment.

FIG. 8 shows a terminal-equipped button cell of a fourth embodiment according to the present invention, in which a terminal-equipped button cell 30 of the fourth embodiment is characterized in that two first welded parts 15 are provided and two second welded parts 16 are provided as compared to the terminal-equipped button cell 100 of the first embodiment.

The structure of the fourth embodiment has two first welded parts 15 spaced apart at a position along the virtual line L when the virtual line L passing through the center 2a along the width direction of the cathode connecting part 10A is drawn as shown in FIG. 8. The two second welded parts 16 are also formed at positions close to the rim 2b so as to be parallel to the two first welded parts 15.

In the fourth embodiment, two first welded parts 15 and two second welded parts 16 are provided, but the number of each welded part to be installed is not particularly limited.

Even with the terminal-equipped button cell 30 of the fourth embodiment, it is possible to obtain the same effect as the terminal-equipped button cell 100 of the first embodiment.

### [Examples]

A button-type silver oxide cell having an internal structure of an outer diameter of 7.9 mm and a thickness of 1.65 mm was experimentally produced as shown in FIG. 4 and tested. Both a cathode can and an anode can of the button-type cell are made of stainless steel, and the thickness of the stainless steel forming an inner wall of the cathode can and a bottom wall of the anode can is 0.15 mm and 0.23 mm.

As shown in FIG. 4, a cathode mixture, a separator, an anode mixture, and an electrolytic solution were accommodated in the cathode can and the anode can, a gasket was mounted, and the cathode can was caulked and sealed to experimentally produce a cell.

Since a closed space between the cathode can and the anode can was filled with the cathode mixture and the anode mixture, the caulking of the cathode can occurred on a bottom surface of the cathode can to have a convex curvature of 100 µm or less at the center of the bottom surface.

A plurality of cells having the above structure were experimentally produced. Although the convex curvature of the bottom surface of the cathode can varies depending on the produced cell, it fell within a range of 5 µm to 70 µm in all the cells.

A cathode terminal having the shape shown in FIG. 1 was attached to these prototype cells by welding. The cathode terminal was made of stainless steel (SUS304), and four types of cathode terminals having thicknesses of 0.07 mm, 0.10 mm, 0.15 mm, and 0.20 mm shown in Table 1 below were selectively used. The cathode connecting part of the cathode terminal has a length of 6 mm and a width of 2 mm.

As shown in FIG. 1, there are three welded parts in which one welded part at the center of the bottom surface of the cathode can and two welded parts with a distance of 1 mm in a plate width direction of a cathode bonding part positioned 2 mm away from the rim of the bottom surface to the center of the bottom surface. Since heat quantity that can be applied by a laser welding machine can be adjusted, welding was performed on the four types of cathode terminals with the thicknesses by variously setting the heat quantity applied to the laser welding machine to be in a range of 2.6 J to 6.0 J and a pulse width to be in a range 2 to 4 msec, as shown in the following Table 2. In addition, a welding strength was measured according to the following method for the cathode terminal that is laser-welded.

### "Welding Strength Test"

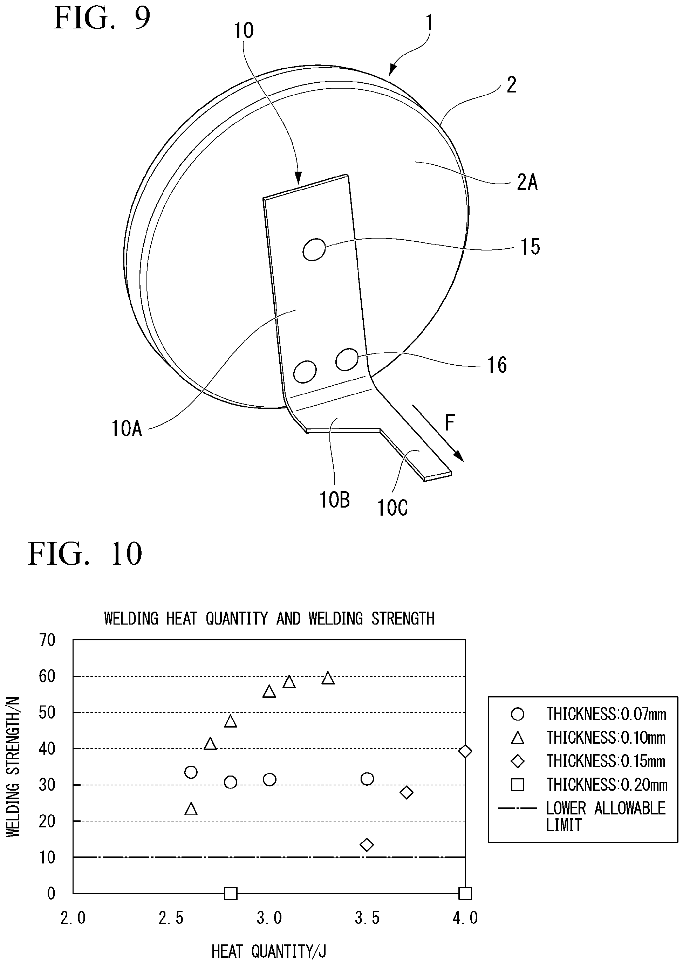

In a welding strength test, as shown in FIG. 9, a tip end of the substrate connecting part 10C of the cell 1 was bent in a direction perpendicular to a welded surface (bottom surface 2A). Next, the bent tip end of the substrate connecting part 10C was held with a jig, and the cell 1 was pressed so as to avoid a terminal portion to perform pulling of the substrate connecting part 10C in an arrow F direction in FIG. 9. Thereafter, a force generated when the second welded part 16 was peeled off from the bottom surface 2A was recorded with a force gauge so as to be used as the welding strength.

The following Table 2 shows a thickness of the terminal (terminal thickness), heat quantity during laser welding, and an obtained welding strength of the second welded part.

**[Table 1]**

| | |
|---|---|
| Comparative Example 1 | 0.07 mm |
| Example 1 | 0.10 mm |
| Example 2 | 0.15 mm |
| Comparative Example 2 | 0.20 mm |

**[Table 2]**

| Terminal Thickness mm | Heat Quantity J | Welding Strength N |
|---|---|---|
| 0.07 | 2.6 | 33.7 |
| | 2.8 | 30.8 |
| | 3.0 | 31.7 |
| | 3.5 | 31.8 |
| 0.10 | 2.6 | 23.3 |
| | 2.7 | 41.7 |
| | 2.8 | 47.7 |
| | 3.0 | 56.1 |
| | 3.1 | 58.5 |
| | 3.3 | 59.5 |
| 0.15 | 2.8 | 0.0 |
| | 3.5 | 13.4 |
| | 3.7 | 27.8 |
| | 4.0 | 39.4 |
| | 4.5 | 55.7 |
| 0.20 | 2.8 | 0.0 |
| | 4.0 | 0.0 |
| | 6.0 | 24.7 |

As for the relationship between the heat quantity and the terminal thickness during welding as shown in measurement results of Table 2, the results are summarized in a graph in which a horizontal axis indicates heat quantity (J) and a vertical axis indicates a welding strength (N), as shown in FIG. 10.

As shown in the graph of FIG. 10 and Table 2, it can be seen that when a lower limit of the welding strength is 10 N, three types of cathode terminals with thicknesses of 0.07 mm, 0.10 mm, and 0.15 mm obtains a sufficiently high welding strength by performing welding while applying the heat quantity of about 2.6 J to 4.5 J.

The cathode terminal having a thickness of 0.20 mm cannot obtain a satisfactory welding strength unless the heat quantity during welding is as high as 6.0 J. When 6.0 J of the heat quantity during welding is applied, the inside of the cell is unnecessarily heat, resulting in a concern about adverse thermal effects on a cell active material and the electrolytic solution. In particular, the silver oxide cell can obtain a good welded part while preventing deterioration of silver oxide.

From the results shown in FIG. 10, in order to secure welding strength without applying too much heat quantity, a desirable terminal having a thickness in a range of 0.07 to 0.15 mm is considered.

The cathode terminal having a thickness of 0.07 mm obtains welding and the welding strength as a terminal, but the cathode terminal is broken at a welding point (second welded part) during measurement of the welding strength, so that it is considered difficult to make the cathode terminal thinner than that described above. In a case of the cathode terminal having a thickness of 0.07 mm, the reason why the welding strength is hardly enhanced even if the heat quantity during welding is increased that the cathode terminal is broken during the welding strength test.

When the cathode terminal is too thin, it is difficult to obtain a sufficient peeling strength as the welded part, and when the cathode terminal is too thick, such as 0.2 mm or greater, elasticity of the terminal itself becomes too high, and the cathode terminal cannot thus be disposed along the bottom surface of the cathode can.

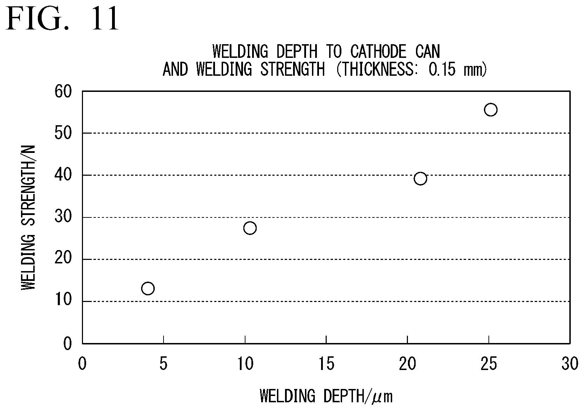

FIG. 11 is a graph showing a relationship between a depth of the welded part and the welding strength with respect to the thickness (0.15 mm) of the bottom wall of the cathode can. When the depth of the welded part is 4 µm, the welding strength is 13.4 N, and when the welding depth is at least 5 µm or greater, the required welding strength of 10 N or greater can be obtained.

### [Reference Signs List]

1: Cell
2: Cathode can
2A: Bottom surface (outer surface)
2a: Center
2b: Rim on one side
2d: Rim on the other side
3: Anode can
4: Gasket
5: Cathode mixture
6: Separator
7: Anode mixture
8: Case
S: Closed space
10: Cathode terminal
10A: Cathode connecting part
10B: Intermediate part
10C: Substrate connecting part
11: Anode terminal
11C: Substrate connecting part
15: First welded part
16: Second welded part
L: Virtual line
G: Gap
S: Connection surface
100, 20, 25, 30: Terminal-equipped button cell

## Claims

1. A terminal-equipped button cell comprising: a cathode can and an anode can having flat cylindrical shapes; a gasket configured to insulate and seal the cathode can and the anode can; and a cathode terminal fixed to a bottom surface of the cathode can and an anode terminal fixed to a bottom surface of the anode can,
wherein the bottom surface of the cathode can is curved convexly and outwardly in a thickness direction by 100 µm or less while being integrated with the anode can, and the cathode terminal has a flat cathode connecting part, and
the cathode terminal is disposed along a radial direction of the bottom surface of the cathode can, and the cathode connecting part is fixed to the bottom surface by being inclined so as to form a tangent line to the bottom surface at a position other than a center of the bottom surface when viewed in a sectional view following the radial direction and perpendicular to the bottom surface.

2. The terminal-equipped button cell according to Claim 1,
wherein the cathode terminal is welded to the cathode can at a plurality of welded parts between the center of the bottom surface of the cathode can and a rim of the bottom surface of the cathode can.

3. The terminal-equipped button cell according to Claim 1 or 2,
wherein a thickness of the cathode terminal is 0.07 to 0.15 mm.

4. The terminal-equipped button cell according to any one of Claims 1 to 3,
wherein the cathode terminal includes the cathode connecting part connected to the cathode can by welding, an intermediate part extending toward the anode can by being bent at a substantially right angle from the cathode connecting part, and a substrate connecting part configured to be connected to a substrate and extending in a direction away from the cathode can by being further bent at a substantially right angle from the intermediate part.

5. The terminal-equipped button cell according to Claim 4,
wherein the substrate connecting part is inclined with respect to a connection surface of the substrate to which the substrate connecting part is connected.

6. The terminal-equipped button cell according to any one of Claims 1 to 5, further comprising:
a substrate connecting part connected to the anode can and extending almost flush with the substrate connecting part of the cathode terminal.
